# EUROPEAN PATENT SPECIFICATION

(11) **EP 0 804 342 B1**
(45) Date of publication and mention of the grant of the patent: **23.10.2002**
(21) Application number: 96940202.3
(22) Date of filing: 18.11.1996
(51) Int. Cl.: B32B 7/00, C09J 7/02, B05C 5/00

(54) **MULTILAYER HOT-MELT ADHESIVE CONSTRUCTION INCLUDING AT LEAST TWO MUTUALLY BONDED HOT-MELT ADHESIVE LAYERS AND A METHOD OF ITS APPLICATION**
HEISSSCHMELZENDE MEHRSCHICHTIGE KLEBSTOFFZUSAMMENSETZUNG ENTHALTEND MINDESTENS ZWEI BEIDERSEITS VERBUNDENE HEISSSCHMELZENDE KLEBSTOFFSCHICHTEN UND VERFAHREN ZUR ANWENDUNG
CONFIGURATION DE COLLE THERMOFUSIBLE MULTICOUCHE COMPRENANT AU MOINS DEUX COUCHES RELIEES, ET MODE D'APPLICATION ASSOCIE

(30) Priority: 22.11.1995 SE 9504167
(43) Date of publication of application: 05.11.1997
(73) Proprietor: Mölnlycke Health Care AB, 405 03 Göteborg (SE)
(72) Inventor: BILLGREN, Tomas, S-430 41 Kullavik (SE); BERDAL, Ove, S-435 42 Mölnlycke (SE); DAHL, Dennis, S-435 39 Mölnlycke (SE)
(74) Representative: Hyltner, Jan-Olof
(86) International application number: SE9601490
(87) International publication number: WO97018945

(56) References cited:
- WO-A-96/08320
- US-A- 3 464 842
- US-A- 5 041 183

## Description

The present invention relates to a multilayered hot-melt adhesive composition carried by a carrier of liquid-permeable material and to a method of its application.

Hot-melt adhesives that have different properties are widely used on an industrial scale. For instance, sticky or tacky hot-melt adhesives are used with adhesive tape, plasters, on the borders of surgical drapes, on surgical tapes and on different types of bandages and wound dressings, such as Mefix and Mepore (registered trademarks) for instance, while dry hot-melt adhesives are used, for instance, with packaging materials, on barrier layers and the on borders or edges of barrier layers (wax or paraffin, for instance). In many applications, hot-melt adhesives are used to bond different materials together, for instance paper to paper, nonwoven to plastic film, or a thread to another form of material. For instance, an adhesive tape is intended to adhere to many different types of material, whereas in the case of surgical plasters, for instance, a sticky hot-melt adhesive fastens a carrier to the wearer's skin. There is a need for a hot-melt adhesive that has different properties on the sides thereof facing towards different materials so as to optimize adhesion of the hot-melt to the different materials.

Surgical plasters and the like are traditionally carrying a tacky hot-melt adhesive. These products are often air-permeable so that the glue is able to penetrate through the carrier when it is thin, which cannot be accepted because the outside of the plaster shall be dry. This means that a conventional carrier must be given a greater thickness than the mechanical strength required in order to prevent adhesive penetrating the carrier.

An object of the invention is to provide a such a carrier in which the risk of adhesive penetration can be ignored when dimensioning the carrier.

This object is achieved in accordance with the invention with a multi-layered hot-melt adhesive in accordance with Claim 1.

Other advantageous embodiments are stated in the subclaims.

The invention also relates to a method of applying a multi-layered hot-melt adhesive characterized by applying the different hot-melt adhesive layers simultaneously with one and the same nozzle means.

The invention also relates to the a hot-melt adhesive used as a release layer. By release layer is meant a product layer that is intended to be removed before using the product, e.g. so as to expose an adhesive layer on a plaster, so that the plaster can be fastened to the user's skin.

By hot-melt adhesive is meant in this document a solid-phase adhesive which is made active by heating and which is normally applied in a molten phase. By open time is meant the time during which the adhesive is able to stick to foreign surfaces after being activated. A dry hot-melt adhesive has an open time of up to fifteen seconds, whereas a tacky hot-melt adhesive has an open time in excess of two hours. A semi-tacky hot-melt adhesive has an open time of up to two hours.

The invention will now be described with reference to the accompanying drawings, in which
Fig. 1 is a schematic cross-sectional view of a first embodiment of an inventive hot-melt adhesive composition;
Figs. 2 and 3 are respectively a schematic cross-sectional view and a schematic perspective view of a second embodiment of an inventive hot-melt adhesive composition;
Fig. 4 illustrates schematically a bond effected between two materials with the aid of an inventive hot-melt adhesive composition;
Fig. 5 is a schematic sectioned view in perspective of a first embodiment of an inventive nozzle means; and
Fig. 6 is a view similar to Figure 5 illustrating a second embodiment of an inventive nozzle means.

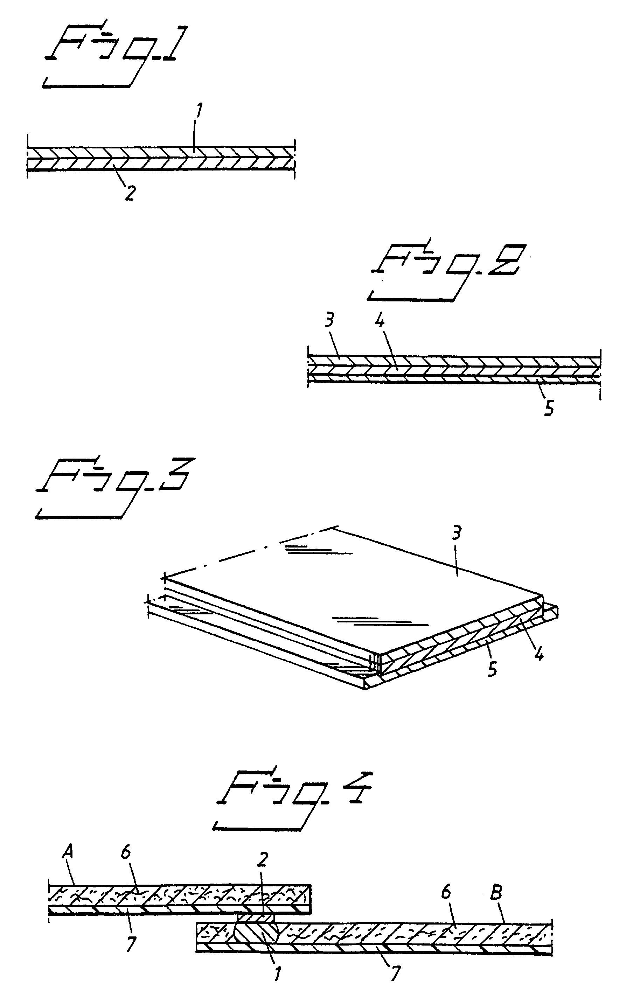

Figure 1 illustrates a hot-melt adhesive composition comprising a first layer 1 of dry hot-melt adhesive and a second layer 2 of tacky hot-melt adhesive. The two layers have been mutually laminated, by heating the layers to a liquid state and applying said layers to a substrate by means of one and the same extrusion nozzle.

Such a two-layer hot-melt adhesive is highly suitable for use with surgical plasters and the like but have an air-permeable carrier. In such carriers, which traditionally carry a tacky hot-melt adhesive, the glue is able to penetrate through the carrier when the carrier is thin, which because the outside of the plaster shall be dry cannot be accepted. This means that, in practice, a conventional carrier must be given a greater thickness than the mechanical strength required, in order to prevent adhesive penetrating the carrier. When using a hot-melt adhesive according to Figure 1 with the dry layer facing towards the carrier, it is no longer necessary to prevent penetration of the adhesive, since adhesive that has penetrated through the carrier will have a dry surface. This enables the risk of adhesive penetration to be ignored when dimensioning such plasters, and the carrier can be made very thin.

The hot-melt adhesive composition illustrated in Figure 1 can also be used conveniently in the lamination of thin absorbent material (e.g. so-called nonwoven) to a barrier layer (e.g. a plastic film). Because the dry layer can be permitted to penetrate deeper into the absorbent layer than when using only a single-layer adhesive, owing to the fact that the penetration risk need no longer be taken into account, much better adhesion is obtained between the laminated materials, and in particular much better wet adhesion.

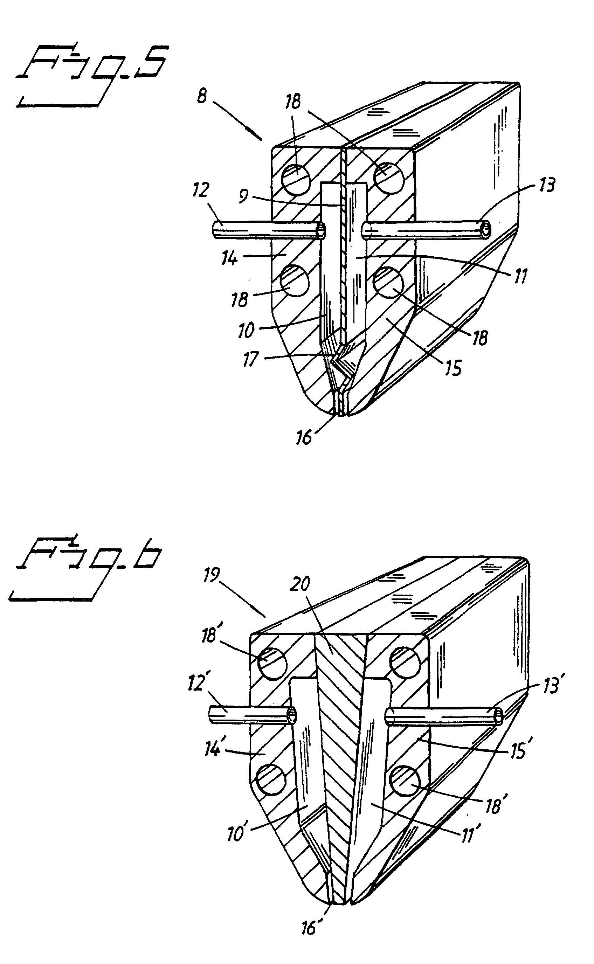

Figure 4 illustrates a similar use of a hot-melt adhesive composition according to Figure 1 for producing a liquid-impervious splice or bond between two pieces of material A, B, each consisting of a layer 6 of absorbent material, e.g. nonwoven material, and a layer 7 of liquid-impervious material, e.g. a plastic material. As shown in the Figure, a string of hot-melt adhesive composition 1, 2 according to Figure 1 has been applied to the absorbent layer 6 of the material piece B with the dry hot-melt adhesive 1 facing towards the absorbent layer. The layer 1 is comprised of a hot-melt adhesive that has a low melt viscosity and is able to fully penetrate the absorbent layer 6, e.g. INSTANT TACK 2300 from National Starch & Chemical HERNIA, Norrkoping, Sweden, thereby to form a liquid-impervious barrier in the absorbent layer. A suitable hot-melt adhesive for the layer 2 is DUROTACK 9671 from the same manufacturer. Thus, there is obtained in a very simple manner a liquid-impervious adhesive bond when splicing together the material pieces A and B, due to the inventive hot-melt adhesive composition, something which is almost impossible to achieve by applying solely one hot-melt adhesive.

It will be understood that the examples given in the aforegoing are not intended to have any limiting effect on the invention and that the invention can be applied whenever there is a need to adapt the properties of those sides of a hot-melt adhesive facing towards the sides of a material to the material concerned in order to provide a bond of better properties. It is pointed out in this regard that the inventive hot-melt adhesive composition may include more than two layers. Furthermore, the invention is not restricted to a combination of a tacky hot-melt adhesive layer and a dry hot-melt adhesive layer, but may include solely different tacky hot-melt adhesives, solely dry hot-melt adhesives of different properties or one of these combinations combined with semi-tacky hot-melt adhesives.

Figures 2 and 3 illustrate a second embodiment of a hot-melt adhesive composition according to the invention, which includes three different layers, 3, 4 and 5 respectively. The layer 3 is comprised of a dry hot-melt adhesive, the layer 4 is comprised of a tacky hot-melt adhesive and the layer 5 is comprised of a dry hot-melt adhesive whose film strength is such as to enable the layer 5 to be pulled loose from the layer 4 of tacky hot-melt adhesive without breaking. Furthermore, adhesion between the layers 3 and 4 is much stronger than between the layers 4 and 5. A layer such as the layer 5 is able to replace advantageously the release paper or release foil that often covers adhesive fastener surfaces, e.g. on surgical plasters, absorbent sanitary products, etc. In such applications, the strength at which the layer 3 adheres to the carrier, e.g. thin nonwoven material, must be greater than the strength at which the layer 5 adheres to the layer 4. It will be understood that a layer such as the layer 5 may be used as a release paper or release foil replacement within the scope of the invention in respect of products where a tacky hot-melt adhesive is directly fastened to a carrier, e.g. a liquid-impervious plastic foil.

To enable the layer 5 to be easily removed manually from the layer 4, the layer 5 is wider than the layers 3 and 4, as shown in Figure 3, so as to provide a gripping edge. This is achieved by extruding with the aid of an extrusion nozzle that has a separate and slightly wider slot for the layer 5 than for the remaining layers 3, 4. The layer 5 may advantageously be comprised of a hot-melt adhesive that has a slightly lower melt viscosity than the hot-melt adhesives from which the layers 3 and 4 are comprised, wherewith the layers 3 and 4 will "squeeze out" the layer 5 and therewith provide a somewhat stronger gripping edge. The difference in surface tension between the dry hot-melt adhesive layer 5 and the tacky hot-melt adhesive layer 4 shall be greater than 0,005 N/m (5 dyne/cm).

By replacing a release paper or a release foil with a release hot-melt adhesive in accordance with the aforegoing, a large number of drawbacks are avoided, primarily associated with the fact that the first-mentioned components are often difficult to handle. Furthermore, application of a release layer is facilitated by virtue of the fact that the layer is applied at the time of extruding a hot-melt adhesive composition in accordance with the invention, for instance the composition shown in Figures 2 and 3, and it is therefore unnecessary to apply a release layer on the product on top of an already applied adhesive coating or in conjunction with applying the coating. The use of a three-layer composition which includes a first layer adapted to the carrier, a second layer adapted to fasten to the foreign object, and a release layer enables direct application in many cases where this is otherwise impossible. When the second layer is also intended to fasten to the carrier, the aforesaid first layer is, of course, not required.

In this respect, it is pointed out that it may be generally advantageous from a handling and manufacturing aspect to replace conventional release paper or conventional release foil with a release hot-melt adhesive which can be applied in some suitable way, for instance by extrusion or spraying.

Figure 5 illustrates a first embodiment of a slotted nozzle suitable for applying a two-layer hot-melt adhesive composition in accordance with the invention. The illustrated nozzle 8 differs from conventional co-extrusion nozzles mainly by virtue of a petition wall 9 which extends in the hollow internal space of the nozzle and divides said space into two separate chambers 10, 11. A respective liquid hot-melt adhesive delivery channel 12 and 13 extends to a respective chamber 10, 11 through the side-walls of the two parts 14, 15 from which the nozzle means 8 is comprised. The lowermost parts of the nozzle parts 14, 15 are mutually spaced to form an outlet slot 16 which extends along essentially the full length of the nozzle 8. The wall 9 also extends into the outlet slot 16. The part of the wall located immediately above the outlet slot is stiffened by means of a fold 17 which extends along the full length of the chambers. In the illustrated embodiment, the stiffening fold 17 has a W-shape. This configuration ensures that the wall 16 will not bulge. In the illustrated case, the wall 9 extends along the full length of the nozzle and the height of the wall is thus relevant to the nozzle parts 14, 15 along three sides. Naturally, the wall can be fastened in some other way, for instance it may suffice to connect the end-parts of the wall with the end-parts of the nozzle parts 14, 15 or to allow the wall to hang freely. Neither is it totally necessary to provide the wall 9 with a stiffening fold.

Although not shown, the nozzle 8 includes heating elements which extend in longitudinally extending recesses 18 formed in the nozzle parts 14, 15 to this end.

Figure 6 illustrates a second embodiment of an inventive nozzle. The main difference between the nozzle 19 in Figure 6 and the nozzle 8 in Figure 5 is found in the configuration of the partition wall 20 of the nozzle 19. Components of the nozzle 19 that find general correspondence with the components of the nozzle 8 shown in Figure 5 have been identified with the same reference signs as those used in Figure 5 but with the addition of a prime. The partition wall 20 of the nozzle 19 has a truncated, elongated triangular cross-section, with the apex of the triangle located in the outlet slot 16'. The partition wall is made of a heat-insulating material, for instance a ceramic material or a high-temperature resistant plastic such as PPS, for instance. Partition walls of this kind are suitable for use in nozzles used to apply hot-melt adhesives where large differences in melting heat exist.

The inventive nozzles may also be constructed to apply one or more strings of hot-melt adhesive composition by dividing the outlet slot into one or more outlets with the aid of lower walls, said outlets being given a length corresponding to the desired width of the applied string.

## Claims

1. A multi-layered hot-melt adhesive carried by a carrier (6) of liquid-permeable material, **characterised in that** the multi-layered hot-melt adhesive consist of an inner layer (1) of a dry hot-melt adhesive facing towards the carrier (6) and an outer layer (2) of tacky hot-melt adhesive facing away from the carrier, at least a part of the layer (1) of dry hot-melt adhesive penetrating into the carrier material.

2. A multi-layered hot-melt adhesive according to Claim 1, wherein the layer (1) of dry hot-melt adhesive is fully penetrating the carrier (6).

3. A multi-layered hot-melt adhesive according to Claim 2, comprising a release layer (5), wherein the release layer (5) consists of a dry hot-melt adhesive whose film strength is such as to enable the release layer to be pulled loose from the layer (2) of tacky hot-melt adhesive without breaking.

4. A release layer (5) covering a layer (4) of tacky hot-melt adhesive fastened to a carrier, **characterised in that** the release layer (5) consists of a dry hot-melt adhesive whose film strength is such as to enable the release layer to be pulled loose from the layer (4) of tacky hot-melt adhesive without breaking.

5. A method of applying a multi-layered hot-melt adhesive comprising a layer of dry hot-melt adhesive and a layer of tacky hot-melt adhesive on a carrier material, **characterised by** applying the different hot-melt adhesive layers simultaneously and with the aid of the one and same nozzle means.

## Patentansprüche

1. Mehrschicht-Heißschmelzhaftmittel, das durch einen Träger (6) aus flüssigkeitsdurchlässigem Material getragen wird, **dadurch gekennzeichnet, dass** das Mehrschicht-Heißschmelzhaftmittel aus einer inneren Schicht (1)aus einen trockenen Heißschmelzhaftmittel, das zu dem Träger (6) gerichtet ist, und einer äußeren Schicht (2) aus klebrigen Heißschmelzhaftmittel besteht, die von dem Träger weggerichtet ist, wobei wenigstens ein Teil der Schicht (1) aus trockenem Heißschmelzhaftmittel in das Trägermaterial eindringt.

2. Mehrschicht-Heißschmelzhaftmittel nach Anspruch 1, wobei die Schicht (1) aus trockenem Heißschmelzhaftmittel vollständig in den Träger (6) eindringt.

3. Mehrschicht-Heißschmelzhaftmittel nach Anspruch 2 mit einer Löseschicht (5), wobei die Löseschicht (5) aus einem trockenen Heißschmelzhaftmittel besteht, dessen Filmfestigkeit derart ist, dass für die Löseschicht ermöglicht wird, dass sie von der Schicht (2) aus klebrigem Heißschmelzhaftmittel ohne Reißen losgezogen wird.

4. Löseschicht (5), die eine Schicht (4) aus klebrigem Heißschmelzhaftmittel, das an einem Träger befestigt ist, abdeckt, **dadurch gekennzeichnet, dass** die Löseschicht (5) aus einem Heißschmelzhaftmittel besteht, dessen Filmfestigkeit derart ist, dass für die Löseschicht ermöglicht wird, dass ein von der Schicht (4) aus klebrigem Heißschmelzhaftmittel ohne Reißen losgezogen wird.

5. Verfahren zum Aufbringen eines Mehrschicht-Heißschmelzhaftmittels mit einer Schicht aus trockenem Heißschmelzhaftmittel und einer Schicht aus klebrigem Heißschmelzhaftmittel auf ein Trägermaterial, **gekennzeichnet durch** Aufbringen der unterschiedlichen Heißschmelzhaftmittel-Schichten gleichzeitig und mit Hilfe ein und derselben Düseneinrichtung.

## Revendications

1. Adhésif thermofusible multicouche supporté par un support (6) de matériau perméable aux liquides, **caractérisé en ce que** l'adhésif thermofusible multicouche se compose d'une couche intérieure (1) d'un adhésif thermofusible sec regardant vers le support (6) et d'une couche extérieure (2) d'adhésif thermofusible gluant regardant à l'opposé du support, au moins une partie de la couche (1) d'adhésif thermofusible sec pénétrant à l'intérieur du matériau de support.

2. Adhésif thermofusible multicouche selon la revendication 1, dans lequel la couche (1) d'adhésif thermofusible sec pénètre complètement dans le support (6).

3. Adhésif thermofusible multicouche selon la revendication 2, comprenant une couche protectrice (5), la couche protectrice (5) étant constituée par un adhésif thermofusible sec dont la résistance pelliculaire est telle qu'elle permette à la couche protectrice d'être retirée de la couche (2) d'adhésif thermofusible gluant sans se rompre.

4. Couche protectrice (5) recouvrant une couche (4) d'adhésif thermofusible gluant fixée à un support, **caractérisée en ce que** la couche protectrice (5) se compose d'un adhésif thermofusible sec dont la résistance pelliculaire est telle qu'elle permette à la couche protectrice d'être retirée de la couche (4) d'adhésif thermofusible gluant sans se rompre.

5. Procédé d'application d'un adhésif thermofusible multicouche comprenant une couche d'adhésif thermofusible sec et une couche d'adhésif thermofusible gluant sur un matériau de support, **caractérisé par** l'application de couches d'adhésif thermofusible différentes simultanément et à l'aide d'un seul moyen formant buse unique.
